Europäisches Patentamt

European Patent Office

Office européen des brevets

(11) Publication number: **0 181 747**
**A2**

(12) **EUROPEAN PATENT APPLICATION**

(21) Application number: **85307921.8**

(22) Date of filing: **31.10.85**

(51) Int. Cl.⁴: **B 65 H 81/00**

(30) Priority: **03.11.84 GB 8427876**

(43) Date of publication of application:
**21.05.86 Bulletin 86/21**

(84) Designated Contracting States:
**DE FR GB IT**

(71) Applicant: **The British Petroleum Company p.l.c.**
**Britannic House Moor Lane**
**London EC2Y 9BU(GB)**

(72) Inventor: **Mayer, Rayner Michael**
**The British Petroleum Co. p.l.c. Chertsey Road**
**Sunbury-on-Thames Middlesex, TW16 7LN(GB)**

(74) Representative: **Crack, Richard David et al,**
**c/o The British Petroleum Company plc Patents Division**
**Chertsey Road**
**Sunbury-on-Thames Middlesex, TW16 7LN(GB)**

(54) **Tape wrapping apparatus and method.**

(57) An apparatus for wrapping a body (1) with a length of
tape (2) comprises a feeding means (3) including a tape
guide (5), means (10) for rotating the body (1) about a first
axis (20), the feeding means (3) and the body (1) being
relatively moveable between a first position in which rotation
of the body (1) about the first axis (20) causes the tape (2) to
be wrapped across the body (1) in a first direction and a
second position in which the tape (2) is wrapped across the
body (1) in the reverse direction. Means (11) is included for
rotating the body (1) about a second axis to thereby effect the
movement between said first and second positions. A
method of tape wrapping is also described.

FIG.1

EP 0 181 747 A2

## TAPE WRAPPING APPARATUS AND METHOD

This invention relates to apparatus for wrapping a body with a length of tape and a method therefor.

Copending European Patent Application No. 0127975 describes and claims a wrapped housing suitable for containing a rotatable body such as an energy storage flywheel which housing comprises at least two parts which together define a space within which the flywheel can be rotated, the parts being secured together by a length of a high tensile strength tape which is wrapped around the parts to provide at least one layer of tape overlapping at its edges which envelops and is in contact with at least 50% of the surface area of the housing such that a point loading caused by the impact of the rotatable body, or a part thereof, with the inner surface of the housing is transformed into a loading over the surface of the parts wrapped with tape.

It is important when manufacturing the housing as described in European patent application No 0127975, that the tape should not only be in tension along its length but should also have a substantially uniform tension across its width as it is wound around the housing and that the tape should be accurately positioned such that each winding overlaps an adjacent winding by a certain amount.

An apparatus has now been invented suitable for wrapping the tape around the housing described in European patent application No. 0127975.

Although the apparatus according to the present invention was developed particularly for the production of apparatus for

1

containing a rotatable body as described in European Patent
Application No 0127975, it may be used to tape wrap other products.

According to the present invention apparatus for wrapping a
a body comprises

(a)   a feeding means (3) for feeding the tape (2) to the body (1)
      and

(b)   means (10) for rotating the body about a first axis (20) the
      feeding means (3) and the body (1) being relatively moveable
      between a first position in which rotation of the body (1)
      about the first axis (20) causes the tape (2) to be wrapped
      across the body (1) in a first direction and a second position
      in which the tape (2) is wrapped across the body (1) in the
      reverse direction.

The apparatus can further comprise means (11) for rotating the
body (1) about a second axis inclined to the first axis to thereby
effect the movement between said first and second positions.

Preferably the speed of rotation about the second axis in
relation to the speed of rotation about the first axis (20) is
controllably variable to thereby control the degree of overlap
between successive tape wrappings.

Preferably means (18, 19) are provided for sensing the position
of the tape (2) and actuate the movement between said first and
second positions.

The means for sensing the position of the tape (2) can comprise
a plurality of sensors (18, 19) associated with a tape guide (5),
the sensors (18, 19 )being disposed so that one of the sensors is
actuated as the tape (2) completes its traverse across the body (1)
in one direction and another of the sensors is actuated as the tape
(2) completes its traverse across the body (1) in the reverse
direction.

The sensors (18, 19) can comprise a photocell including a
transmitter (18) and receiver (19) disposed so that as the tape (2)
moves across the guide surface (12) the tape (2) reaches a position
where it interrupts the light beam between transmitter (18) and
receiver (19).

The means for rotating the body (1) about the first axis can comprises a shaft (20) on which the body (1) is to be mounted and a motor (10) for rotating the shaft (20).

Preferably means is provided for maintaining a substantially uniform tension across the width of the tape, said means preferably including a tape guide having a curved guide surface over which the tape is fed to the body.

Conveniently the first and second axes of rotation intersect and are mutually perpendicular, or substantially so, for example the first axis can be horizontal and the second axis vertical, the words horizontal and vertical referring to the disposition of the apparatus in normal use.

The body may comprise a number of parts as described in European Patent Application No. 0127975 which may or may not be rigidly fixed together before the tape is wound around the body. When the body is to be used as a flywheel housing then it conveniently comprises a substantially cylindrical central portion with a convex domed portion at each end of the cylindrical central portion. Projections are preferably provided on the surface of the body, conveniently in the region where the end portions join the central portion to reduce slipping of the tape during the wrapping operation.

Any suitable means may be used to rotate the body. For example, the body may be mounted on, or attached to, a rotatable shaft.

The tape guide can be moveable substantially parallel to the first rotational axis or may move about an arc adjacent to the first rotational axis. The rotational axis may be moveable about a substantially perpendicular axis.

In many cases the body may be of cylindrical or substantially cylindrical form, in which case the body will conveniently be rotated about its longitudinal.

Conventional means for tensioning the tape may be used. One suitable means comprises controlling the rate at which the tape is fed to the tape guide such that the rotating body provides the tension by pulling the tape towards it. Additional or alternative means may also be used such as for example passing the tape through tension rollers.

The guide surface of the tape guide is a convex curve which assists in maintaining a substantially uniform tension across the width of the tape. The guide surface preferably has a curve similar to the curve of the surface over which the tape is being wound. Thus, the curve of the guide surface is preferably related to the nominal radius of the substantially cylindrical body and to the angle at which the tape is wound about the body. When the tape is wound across the surfaces of a cylindrical body from one end to the other, the curve of the surface over which the tape is laid is an arc of an ellipse. If the width of the tape is relatively narrow compared with the dimensions of the substantially cylindrical body, the guide surface may conveniently be an arc of a circle. The radius of the arc of such a circle may be approximately equal to the nominal radius of the body divided by the cosine of the angle at which the tape is wrapped across the body.

The sensors associated with the guide surface may be any conventional sensor capable of detecting the position of the tape on the guide surface such as, for example, microswitches or photocells.

According to another aspect of the present invention a method for wrapping a body (1) with a length of tape (2) comprises fastening the end of the tape (2) to the body (1), rotating the body (1) in a first position about a first axis and feeding the tape (2) to the body (1) in a manner such that the tape (2) is wound from one end of the body (1) to the other and moving the body (1) to a second position such that continued rotation of the body (1) about the first axis wraps the tape (2) across the body (1) in the reverse direction.

Preferably the speed of rotation of the body (1) in relation to the speed at which the body (1) is moved between the first and second positions is controlled so as to control the amount of overlap between successive tape wrappings.

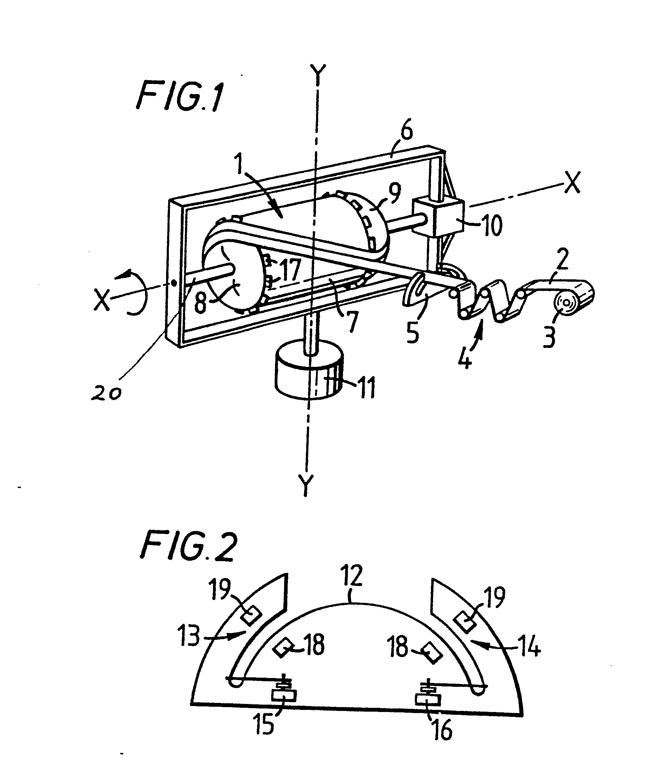

The invention will be described with reference to the accompanying drawings Figs 1 and 2 in which Figure 1 is a schematic representation of an embodiment of the apparatus according to the present invention and Figure 2 is a plan view of a tape guide suitable for use in apparatus according to the invention.

Figure 1 is a schematic representation showing a substantially cylindrical body 1 being wrapped with a tape 2. The tape 2 is fed from a feed roller 3, through tension rollers 4 and a tape guide 5 to the body 1. The body 1 is mounted on a rotatable shaft 20 which is in turn mounted in a framework 6. The body 1 comprises a cylindrical portion 7 having domed end pieces 8 and 9 and is substantially as described in the applicants copending European Patent Application No. 0127975. Projections 17 are positioned around the circumference of the body 1. These projections 17 help to prevent slip of the tape during the wrapping operation. A motor 10 mounted on the framework 6 provides the means for rotating the body 1 about the longitudinal axis X-X and a second motor 11 provides means for rotating the framework 6 about an axis Y-Y, thereby providing means for producing relative movement between the tape guide 5 and the rotational axis X-X of the means 10 for rotating the body 1.

The tape 2 is initially fed from the feed roller 3, through the tension rollers 4 and tape guide 5 and the end of the tape fixed to the body 1 using for example a suitable mechanical fastener or an adhesive. The framework 6 is then manoeuvered into a first position such that as the body is rotated about the axis X-X the tape is wrapped from one end of the body 1 to the other. Rotation of the body 1 in the direction indicated by the arrow causes the tape to be pulled through the tension rollers. Preferably, the longitudinal tension on the tape is from 0.5 to 2% of the breaking strain of the tape. As the tape 2 is wound from one domed end, across the cylindrical portion to the other domed end, the tape 2 moves across the guide surface of the tape guide. The sensors associated with the guide surface are positioned such that the tape on the guide surface actuates one of the sensors just as the tape completes its traverse across the body 1. The sensor sends a signal to the motor 11 for rotating the framework 6. The signal actuates the motor 11 which rotates the framework 6 about the axis Y-Y into a second position such that rotation of the body wraps the tape across the body in the opposite direction and reverses the direction of movement of the tape across the guide surface. The amount by which each winding overlaps the previous winding is adjusted by controlling the speed at which the body is rotated about axis 20 in relation to the speed at which the frame 6 is rotated about axis Y-Y between the first and second positions. At the end of the wrapping sequence, the free end of the tape may be fixed to the body or to the tape overwrap using for example a mechanical fastener, an adhesive or it may be stiched to the tape overwrap.

A tape guide 5 is illustrated in Figure 2. The tape guide comprises a guide surface 12 and four sensors 13, 14, 15 and 16. The guide surface is a convex curve. The curve assists in maintaining a substantially uniform tension across the width of the tape. The curve is preferably similar to the profile curve of the surface over which the tape is wrapped. The two sensors 13 and 14 associated with the guide surface 12 are photocells each of which comprises a transmitter 18 and a receiver 19. As the tape moves across the guide surface 12, it interrupts the light beam between the transmitter and receiver of one of the sensors. The sensor then sends a signal to the means 11 for producing relative movement between the tape guide and the rotational axis of the means for rotating the body. This signal actuates the motor 11 which moves the framework 6 into a second position which reverses the travel of the tape both across the body 1 and across the guide surface 12. The two additional sensors 15 and 16 are microswitches and are used to indicate a failure of the wrapping sequence. Under normal conditions, the tape direction across the guide surface 12 should be reversed each time one of the sensors 13 and 14 detects the tape. Thus the tape 2 should not, under normal conditions, reach the sensors 15 or 16. If however, the tape does pass one of the sensors 13 and 14 then the sensors 15 and 16 may be used to indicate a failure of the wrapping sequence either by actuating an alarm or an error indicator or simply stopping the wrapping operation.

Claims:

1 Apparatus for wrapping a body (1) with a length of tape (2) comprising

(a)  a feeding means (3) for feeding the tape (2) to the body (1) and

(b)  means (10) for rotating the body about a first axis (20) the feeding means (3) and the body (1) being relatively moveable between a first position in which rotation of the body (1) about the first axis (20) causes the tape (2) to be wrapped across the body (1) in a first direction and a second position in which the tape (2) is wrapped across the body (1) in the reverse direction.

2 Apparatus as claimed in claim 1 characterised in that the apparatus further comprises means (11) for rotating the body (1) about a second axis inclined to the first axis to thereby effect the movement between said first and second positions.

3 Apparatus as claimed in claim 2 characterised in that the speed of rotation about the second axis in relation to the speed of rotation about the first axis (20) is controllably variable to thereby control the degree of overlap between successive tape wrappings.

4 Apparatus as claimed in any one of the preceding claims characterised in that means (18, 19) are provided for sensing the position of the tape (2) and actuate the movement between said first and second positions.

5 Apparatus as claimed in any one of the preceding claims characterised in that means (5) are provided preferably in the form of a tape guide for maintaining a substantially uniform tension across the width of the tape (2) during the wrapping operation.

6 Apparatus as claimed in claim 5 characterised in that the means for sensing the position of the tape (2) comprises a plurality of sensors (18, 19) associated with the tape guide (5), the sensors (18, 19 )being disposed so that one of the sensors is actuated as the tape (2) completes its traverse across the body (1) in one direction and another of the sensors is actuated as the tape (2) completes its traverse across the body (1) in the reverse direction.

7 Apparatus as claimed in claim 6 characterised in that the sensors (18, 19) comprise a photocell including a transmitter (18) and receiver (19) disposed so that as the tape (2) moves across the guide surface (12) the tape (2) reaches a position where it interrupts the light beam between transmitter (18) and receiver (19).

8 Apparatus as claimed in any one of the preceding claims characterised in that the means for rotating the body (1) about the first axis comprises a shaft (20) on which the body (1) is to be mounted and a motor (10) for rotating the shaft (20).

9 Apparatus as claimed in claim 8 characterised in that the apparatus further comprises a supporting structure (6) for the body (1), rotation shaft (20) and motor (10).

10 A method for wrapping a body (1) with a length of tape (2) which method comprises fastening the end of the tape (2) to the body (1), rotating the body (1) in a first position about a first axis and feeding the tape (2) to the body (1) in a manner such that the tape (2) is wound from one end of the body (1) to the other and moving the body (1) to a second position such that continued rotation of the body (1) about the first axis wraps the tape (2) across the body (1) in the reverse direction.

11 A method as claimed in claim 10 characterised in that the longitudinal tension in the tape (2) is from 0.1 to 20% preferably 0.5 to 5% of the breaking strain.

0181747

12 A method as claimed in claim 10 or 11 characterised in that the speed of rotation of the body (1) in relation to the speed at which the body (1) is moved between the first and second positions is controlled so as to control the amount of overlap between successive tape wrappings.

13 A method as claimed in claim 12 characterised in that the degree of overlap beween successive tape wrappings is from 10 to 75% preferably 25 to 65%.

14 A method as claimed in claim 10 characterised in that the moving of the body (1) to the second position comprises rotating the body (1) about a second axis inclined to the first axis, preferably substantially perpendicular thereto.

FIG.1

FIG.2

0181747

1/2